# EUROPÄISCHE PATENTSCHRIFT

(11) **EP 1 581 415 B1**
(45) Veröffentlichungstag und Bekanntmachung des Hinweises auf die Patenterteilung: **11.07.2007**
(21) Anmeldenummer: 03740079.3
(22) Anmeldetag: 11.06.2003
(51) Int. Cl.: B60S 1/08, B29C 65/00

(54) **SENSOR ZUM BEFESTIGEN AUF EINER OBERFLÄCHE UND VERFAHREN ZUM BEFESTIGEN EINES SENSORS AUF EINER OBERFLÄCHE**
SENSOR FOR FIXING ONTO A SURFACE AND METHOD FOR FIXING A SENSOR ONTO A SURFACE
CAPTEUR A FIXER SUR UNE SURFACE ET PROCEDE POUR FIXER UN CAPTEUR SUR UNE SURFACE

(30) Priorität: 02.12.2002 DE 10256243
(43) Veröffentlichungstag der Anmeldung: 05.10.2005
(73) Patentinhaber: ROBERT BOSCH GMBH, 70442 Stuttgart (DE)
(72) Erfinder: SCHNEIDER, Andreas, 77833 Ottersweier (DE)
(86) Internationale Anmeldenummer: PCT/DE2003/001930
(87) Internationale Veröffentlichungsnummer: WO 2004/050441

(56) Entgegenhaltungen:
- EP-A- 0 461 424
- EP-A- 0 928 723
- WO-A-01/05636
- WO-A-99/09681
- DE-A- 4 101 995
- PATENT ABSTRACTS OF JAPAN vol. 1999, no. 04, 30. April 1999 (1999-04-30) -& JP 11 001156 A (YAZAKI CORP), 6. Januar 1999 (1999-01-06)

## Beschreibung

Die Erfindung betrifft ein Verfahren zum Befestigen eines Sensors auf einer Oberfläche, insbesondere zum Befestigen eines Regensensors auf einer Scheibenoberfläche eines Kraftfahrzeugs. Die Erfindung betrifft weiterhin einen Sensor zum Befestigen auf einer Oberfläche, insbesondere einen Regensensor.

Die Druckschrift WO99/09681 beschreibt ein Verfahren nach dem Oberbegriff des Anspruchs 1 und einen Sensor nach dem Oberbegriff des Anspruchs 7.

Moderne Regensensoren detektieren die unterschiedliche Reflexion von Licht, das durch eine Scheibe fällt, je nach dem, ob die Scheibe feucht oder trocken ist. Um den Zustand der Scheibe fehlerfrei messen zu können, ist es notwendig, dass der Regensensor dauerhaft und homogen an der Scheibe befestigt ist, d.h. dass zwischen Scheibe und Regensensor eine definierte Lichtbrechung auftritt. Dazu ist es notwendig, den Regensensor mit besonderen Verfahren an der Scheibe zu befestigen, insbesondere so, dass keine Luftblasen an der Klebefläche zwischen dem Regensensor und der Scheibe verbleiben.

In der Druckschrift WO 96/21568 ist eine Vorrichtung dargestellt, mit deren Hilfe ein optischer Sensor auf einer Scheibe angebracht werden kann. Die Vorrichtung dient dazu, ein Vakuum zu erzeugen, in dem der optische Sensor mithilfe eines selbstklebenden transparenten Klebebandes auf die Scheibe geklebt wird. Das Vakuum bewirkt, dass keine Luftblasen in der Klebefläche verbleiben.

Weiterhin ist bekannt, Sensoren mithilfe von Federn an die Scheibe anzupressen, so dass durch Druck die Luftblasen an der Klebefläche herausgedrückt werden.

Weiterhin muss bei herkömmlichen Sensoren die Oberfläche des Sensors, der auf die Scheibe geklebt werden soll, der Form der Scheibe angepasst sein, so dass eine dauerhafte flächige Verbindung und eine homogene Grenzlinie zwischen Sensor und Scheibenoberfläche entsteht.

Es ist Aufgabe der vorliegenden Erfindung ein verbessertes Verfahren zum Befestigen eines Sensors auf einer Oberfläche zur Verfügung zu stellen. Es soll dazu weder ein Vakuumprozess benötigt werden, noch dass die Oberfläche des Sensors an die Oberflächenform der Scheibe angepasst werden muss. Weiterhin ist es Aufgabe der Erfindung, einen Sensor zum Befestigen auf einer Oberfläche zur Verfügung zu stellen.

Diese Aufgabe wird durch das Verfahren zum Befestigen eines Sensors auf einer Oberfläche nach Anspruch 1, sowie durch den Sensor nach Anspruch 7 und die Sensoranordnung auf einer Oberfläche nach Anspruch 13 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Befestigen eines Sensors auf einer Oberfläche, insbesondere zum Befestigen eines Regensensors auf einer Scheibenoberfläche vorgesehen. Auf der Oberfläche wird zunächst ein Halteelement aufgebracht, wobei der Sensor auf einer auf die Oberfläche aufsetzende Seite mit einem plastisch verformbaren Koppelmedium, das ein Klebemittel umfasst, versehen wird. Der Sensor wird auf die Oberfläche aufgesetzt, so dass der Sensor mithilfe des Halteelements auf die Oberfläche gedrückt wird, wodurch das Koppelmedium durch den Anpressdruck plastisch verformt wird. Das Koppelmedium wird mit einer ballonförmigen Oberfläche auf den Sensor aufgebracht.

Auf diese Weise ist es möglich, einen Sensor auf einer Oberfläche zu befestigen, ohne dass ein aufwändiger Vakuumklebeprozess und ein Anpassen des Sensors an die Form der Oberfläche notwendig ist. Das erfindungsgemäße Verfahren sieht vor, ein plastisch verformbares Koppelmedium zum Verbinden von Sensor und Oberfläche zu verwenden. Das plastisch verformbare Koppelmedium wird unter Druck zwischen dem Sensor und der Oberfläche so verformt, dass sich das Koppelmedium an die Oberflächen homogen anpasst.

Ist das Koppelmedium zuvor nur an einem bestimmten Punkt der auf die Oberfläche aufzusetzenden Seite des Sensors aufgebracht, so verdrängt beim Aufsetzen des Sensors das sich in seiner Breite zwischen dem Sensor und der Oberfläche ausdehnende Koppelmedium die Luft nach außen, so dass eine Blasenbildung vermieden werden kann. Ist der Bereich zwischen dem Sensor und der Scheibenoberfläche vollständig mit dem Koppelmedium ausgefüllt, so wird der Sensor durch das Klebemittel hinsichtlich Zugkräfte fest an der Oberfläche gehalten. Das Halteelement dient zudem dazu, ein seitliches Verschieben des Sensors durch Scherkräfte zu vermeiden, wodurch eventuell die durch das Koppelmedium hervorgerufene Verbindung zwischen Sensor und Oberfläche gelöst werden könnte.

Es kann vorgesehen sein, dass der Sensor so auf die Oberfläche aufgesetzt wird, dass das Halteelement mit einer Halteeinrichtung des Sensors zusammenwirkt. Vorzugsweise weist das Halteelement einen Bolzen auf, der auf der Oberfläche befestigt wird, wobei die Halteeinrichtung des Sensors eine Ausnehmung bzw. eine Öffnung aufweist. Der Sensor wird so auf den Bolzen aufgesetzt, dass der Bolzen in die Ausnehmung eingreift, wobei der Bolzen in der Ausnehmung verspannt wird, so dass der Sensor gegen die Oberfläche gedrückt wird.

Durch das Befestigen des Bolzens auf der Oberfläche ist es möglich, Kraft in Richtung der Oberfläche auf den Sensor auszuüben und weiterhin den Sensor vor dem Einwirken von Scherkräften zu schützen, die zu einem. Lösen der Klebeverbindung zwischen Sensor und Oberfläche führen können. Die Krafteinwirkung dient dazu, beim Aufsetzvorgang des Sensors auf die Oberfläche das Koppelmedium zu verformen und flächig zwischen Sensor und Oberfläche zu verbreiten.

Um den Sensor mit dem Bolzen zu verspannen, wird ein Verspannelement an einem Kopf des Bolzens angebracht, so dass eine Kraft zwischen dem Kopf des Bolzens und dem Sensor in Richtung der Oberfläche ausgeübt wird. Auf diese Weise ist es möglich, durch ein nachträgliches Einfügen eines Verspannelements den Druck zwischen Sensor und Oberfläche zu bewirken, so dass beim Zusammenbau zunächst die Bolzen an der Oberfläche angebracht werden, anschließend der Sensor mit dem Koppelmedium aufgesetzt wird und dass durch Einsetzen des Verspannelements der Druck zwischen Sensor und Oberfläche aufgebaut wird. Dies erleichtert den Montageprozess wesentlich.

Vorzugsweise wird das Halteelement mithilfe eines Klebstoffs an der Oberfläche befestigt, wobei der Klebstoff so gestaltet ist, um einer Zugkraft zwischen dem Halteelement und der Oberfläche zu widerstehen, zumindest solange bis der Sensor durch das Koppelmedium befestigt ist. Vorzugsweise kann vorgesehen sein, dass das Halteelement mithilfe einer PUR-Folie oder PVB-Folie an der Oberfläche befestigt wird.

Das Koppelmedium wird mit einer ballonförmigen Oberfläche auf dem Sensor, vorzugsweise mittig aufgebracht, so dass beim Aufbringen des Sensors auf die Oberfläche sich die Auftrefffläche des Koppelmediums auf die Oberfläche von innen nach außen vergrößert und somit die in dem Zwischenraum zwischen Sensor und Oberfläche befindliche Luft von innen nach außen verdrängt. Somit kann eine Blasenbildung vermieden werden.

Gemäß einem weiteren Aspekt der vorliegenden Erfindung ist ein Sensor zum Befestigen auf einer Oberfläche vorgesehen. Der Sensor weist eine Halteeinrichtung zum Zusammenwirken mit einem auf der Oberfläche angebrachten Halteelement auf. Die Halteeinrichtung ist geeignet, um eine Kraft zwischen dem Sensor und der Oberfläche zu bewirken, wobei der Sensor auf einer auf die Oberfläche aufzusetzende Seite mit einem plastisch verformbaren Koppelmedium, das Klebstoff aufweist, versehen ist, um nach Aufbringen unter Druck den Sensor auf der Oberfläche zu befestigen.

Ein solcher Sensor kann auf einfache Weise auf einer Oberfläche befestigt werden, wenn auf der Oberfläche ein Halteelement aufgebracht ist, das geeignet ist, mit der Halteeinrichtung zusammen zu wirken. Die Halteeinrichtung dient dazu, auf den Sensor eine Kraft in Richtung der Oberfläche auszuüben, so dass das Koppelmedium plastisch verformt wird und den gesamten Bereich zwischen Oberfläche und Sensor ausfüllt. Ein solcher Sensor muss nicht an die Oberflächenform der Oberfläche angepasst sein, da das plastisch verformbare Koppelmedium Unterschiede der Formgebung zwischen Sensor und Oberfläche ausgleicht. Darüber hinaus kann die Halteeinrichtung, die auch im verklebten Zustand mit dem Halteelement zusammenwirkt, Scherkräfte aufnehmen, so dass die Gefahr einer Ablösung des Sensors von der Oberfläche reduziert werden kann.

Das Koppelmedium ist ballonförmig, insbesondere mittig auf dem Sensor aufgebracht. Dies dient dazu, dass beim Aufbringen des Sensors auf die Oberfläche das Koppelmedium sich plastisch verformt, so dass sich die Auftrefffläche des Koppelmediums auf die Oberfläche von innen nach außen ausdehnt und somit Luft von innen nach außen verdrängt. Dadurch wird vermieden, dass Luftblasen entstehen können. Vorzugsweise ist das Koppelmedium mit einem Farbstoff versehen, um die Optik optimal einzustellen. Beispielsweise kann ein schwarzer Farbstoff, der Infrarot-durchlässig ist, verwendet werden.

Es kann vorgesehen sein, dass die Halteeinrichtung des Sensors eine Ausnehmung aufweist, in die das Halteelement eingreifen kann. Die Halteeinrichtung weist darüber hinaus ein Verspannelement auf, mit dem das Halteelement und der Sensor gegeneinander verspannbar sind, um auf den Sensor eine Kraft gegen die Oberfläche auszuüben. Dies dient dazu, dass der Sensor zunächst kraftlos auf die Oberfläche aufgesetzt werden kann, so dass das Halteelement in die Halteeinrichtung eingreift. Erst nachdem der Sensor positioniert worden ist, wird ein Verspannelement eingesetzt, so dass eine Kraft auf das Koppelmedium zwischen Sensor und Oberfläche ausgeübt wird.

Das Halteelement umfasst vorzugsweise einen Bolzen mit einem Kopf, wobei das Verspannelement als Schiebeelement ausgebildet ist, um beim Verschieben mit dem Kopf des Bolzens zusammen zu wirken, so dass eine Kraft zwischen dem Sensor und der Oberfläche ausgeübt wird. Vorzugsweise weist das Schiebeelement eine Schräge auf, die mit einer Kante des Kopfes des Bolzens zusammen wirkt, so dass bei Verschieben des Schiebeelements in Richtung des Kopfes durch Eingreifen der Schräge an der Kante des Kopfes eine Kraft zwischen Bolzen und Sensor bewirkt wird, die das Koppelmedium verformt. Alternativ kann vorgesehen sein, dass das Schiebeelement als Federelement ausgebildet ist, das in Richtung des Kopfes des Bolzens verschiebbar ist, um eine Federkraft zwischen der Oberfläche und dem Sensor zu bewirken.

Weiterhin ist eine Sensoranordnung auf einer Oberfläche vorgesehen, auf die der erfindungsgemäße Sensor aufgebracht ist. Die Sensoranordnung weist vorzugsweise ein Halteelement auf, das mit der Oberfläche verklebt ist, um einer Zugkraft so lange zu widerstehen, bis der Sensor mithilfe des Koppelmediums auf der Oberfläche gehalten wird. Auf diese Weise ist es möglich, das Halteelement mit herkömmlichem Kleber an der Oberfläche zu befestigen, ohne Rücksicht auf die Haltbarkeit und Langlebigkeit der Klebeverbindung nehmen zu müssen, da die Befestigung nach Aufbringung des Sensors auf die Oberfläche durch das Koppelmedium gewährleistet wird.

Eine bevorzugte Ausführungsform der Erfindung wird im Folgenden anhand der beigefügten Zeichnungen näher erläutert. Es zeigen:
Figur 1 eine Seitenansicht des erfindungsgemäßen Sensors kurz vor Aufsetzen auf eine Oberfläche;
Figur 2 eine Draufsicht auf die Unterseite eines erfindungsgemäßen Sensors; und
Figur 3 der erfindungsgemäße im auf eine Scheibe montierten Zustand.

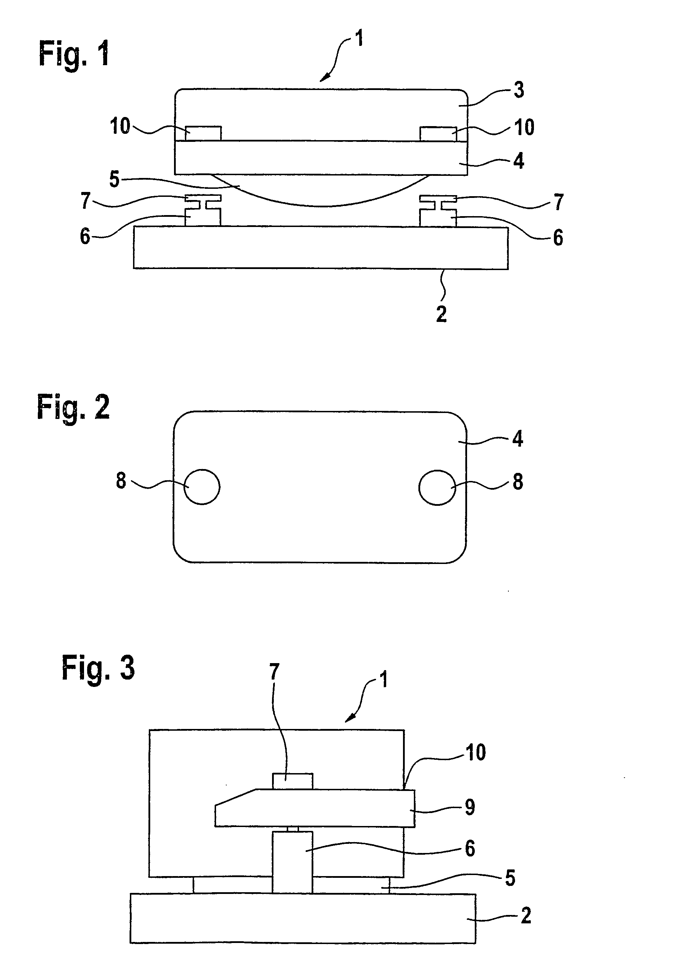

In Figur 1 ist eine Seitenansicht eines Sensors 1 dargestellt, der mit einer Scheibe 2 verbunden werden soll. Der Sensor kann beispielsweise ein optischer Sensor, wie er z.B. als Regensensor bei Kraftfahrzeugen verwendet wird, sein. Insbesondere bei optischen Sensoren ist es notwendig, dass die Verbindung zwischen dem Sensor und der Oberfläche, auf die der Sensor 1 aufgebracht werden soll, homogen ist, so dass ein definiertes Reflexionsverhalten erreicht wird.

Der Sensor weist ein Gehäuse 3 auf, das mit einem Lichtleiter 4 verbunden ist. Der Lichtleiter 4 des Sensors 1 soll mit der Scheibe möglichst homogen verbunden werden, so dass ein definiertes Brechungsverhalten zwischen dem Lichtleiter und der Scheibe entsteht.

Um den Sensor 1 auf der Scheibe zu befestigen, ist ein Koppelmedium 5 vorgesehen, das auf einer Oberfläche des Lichtleiter 4 aufgebracht ist. Das Koppelmedium 5 ist optisch aktiv und zumindest für ausgewählte Wellenlängen durchlässig. Das Koppelmedium 5 weist einen Klebstoff auf und soll möglichst plastisch verformbar sein. Das Koppelmedium 5 ist möglichst mittig, ballon- oder tropfenförmig auf dem Lichtleiter aufgebracht, so dass beim Aufpressen des Sensors 1 auf die Scheibe 2 das Koppelmedium in Aufsetzrichtung zusammengepresst wird, so dass es sich seitlich nach außen hin verbreitert. Dadurch wird Luft nach außen verdrängt, so dass keine Luftblasen zwischen Scheibe und Sensor verbleiben.

Damit das Koppelmedium sich in dem Bereich zwischen Sensor 1 und der Scheibe 2 ausbreitet, muss zwischen Scheibe und Sensor eine Kraft ausgeübt werden. Dazu sind auf der Scheibe Halteelemente 6 in Form von Bolzen vorgesehen, die auf die Scheibe 2 aufgeklebt sind. Das Aufkleben der Bolzen 6 kann z.B. mit einer PUR- bzw. PVB-Folie erfolgen. Die Bolzen können auch auf andere Weise auf der Scheibe 2 aufgebracht sein.

Die Bolzen 6 weisen Köpfe 7 auf. Der Sensor 1 weist Öffnungen auf, in die die Bolzen 6 beim Aufsetzen des Sensors 1 auf die Scheibe 2 eingreifen können. Die Öffnungen sind in Figur 2 dargestellt, in der der Sensor 1 von unten gezeigt wird.

Das Gehäuse 3 des Sensors 1 weist zudem Ausnehmungen 8 auf, durch die seitlich, d.h. senkrecht zu dem Bolzen 6 ein Schiebeelement 9, wie es in Figur 3 dargestellt ist, eingebracht werden kann. Das Befestigen des Sensors 1 auf der Scheibenoberfläche erfolgt, indem auf den Sensor 1 zunächst das Koppelmedium mittig aufgetragen wird und anschließend der Sensor 1 so auf die Scheibenoberfläche aufgesetzt wird, dass sich das Koppelmedium zwischen der Scheibenoberfläche und dem Sensor befindet und die Bolzen in die Öffnungen 8 des Sensors 1 hineinragen. In diesem Zustand liegt das Koppelmedium 5 auf dem Sensor 1 nur mit einer relativ geringen Fläche auf der Scheibenoberfläche 2 auf.

Damit eine großflächigere Verbindung zwischen dem Sensor 1 und der Scheibe 2 entsteht, ist es notwendig, den Sensor 1 mit einer Kraft auf die Scheibe 2 zu drücken. Dazu werden in die Ausnehmungen 10 Schiebeelemente 9 eingebracht. Die Schiebeelemente 9 weisen jeweils eine Schräge auf, die so mit dem Kopf des jeweiligen Bolzens 6 zusammen wirkt, dass beim Hineinschieben des Schiebeelementes 9 in die Ausnehmung 10 der Sensor 1 in Richtung der Scheibenoberfläche gedrückt wird. Optional kann das Schiebeelement auch als Federelement ausgeführt sein, so dass beim Einführen des Schiebeelementes 9 in die Ausnehmung 10 zwischen dem Kopf 7 des Bolzens 6 und im Gehäuse 3 des Sensors 1 eine Verspannung entsteht, durch die der Sensor 1 auf die Scheibenoberfläche gedrückt wird.

Vorzugsweise ist das Schiebeelement 9 so ausgeführt, dass eine Verrasteinrichtung vorgesehen ist, so dass das Schiebeelement mit dem Kopf 7 des Bolzens 6 verrastet, so dass das Schiebeelement bei Nachlassen des Anpressdrucks zwischen dem Sensor 1 und Scheibe 2 nicht versehentlich aus der Ausnehmung 10 herausfallen kann. Das Schiebeelement 9 kann so ausgeführt sein, dass es einen Hals zwischen Kopf 7 des Bolzens 6 umgreift und mit diesem verrastet.

Die Bolzen 6 sind vorzugsweise symmetrisch ausgebildet, damit keine spezielle Ausrichtung bei der Verklebung auf der Scheibe 2 notwendig ist.

Das plastisch verformbare Koppelmedium 5 weist beispielsweise einen Kleber auf Acrylbasis auf, kann jedoch auch andersartige Kleber enthalten. Dem Koppelmedium 5 können Farbstoffe beigemengt werden, um die optischen Eigenschaften des Sensors zu optimieren. Beispielsweise können Farbstoffe vorgesehen sein, die für Infrarotlicht durchlässig sind, um die optischen Eigenschaften des auf die Scheibenoberfläche aufgebrachten Sensors 1 zu optimieren.

Bei der Montage wird durch das Schiebeelement 9 eine Kraft auf den Sensor 1 bzw. auf das Koppelmedium 5 ausgeübt, so dass das Koppelmedium 5 zusammengepresst wird und nach außen hin verläuft. Dadurch, dass sich das Koppelmedium unter Druck verbreitert, nimmt die Kraft, die zwischen dem Schiebeelement 9 und dem Kopf 7 des Bolzens 6 wirkt, ab und kann auf Dauer ganz verschwinden. In diesem Fall reduziert sich die Zugkraft auf die Bolzen während des Verklebens des Sensors 1 schon im Verlauf des Klebevorgangs drastisch und kann letztlich auch völlig verschwinden. Aus diesem Grunde sind die Anforderungen an die Befestigung der Bolzen 6 an der Oberfläche der Scheibe 2 relativ gering, da die Befestigung nur anfänglich eine erhebliche Zugkraft aushalten muss. Anforderungen an Langlebigkeit und Haltbarkeit der Befestigung der Bolzen 6 auf der Scheibe 2 sind daher nicht zu berücksichtigen. Dadurch, dass die Bolzen 6 auf der Scheibe verbleiben, ist die Sensoranordnung des Sensors 1 auf Scheibe 2 insbesondere besser gegenüber Scherkräften geschützt, da diese von dem Bolzen 6 aufgefangen werden können. Auf diese Weise wird die Klebeverbindung zwischen Sensor 1 und der Scheibe 2 durch das Koppelmedium 5 entlastet.

## Patentansprüche

1. Verfahren zum Befestigen eines Sensors (1) auf einer Oberfläche, insbesondere zum Befestigen eines Regensensors auf einer Scheibenoberfläche, wobei auf der Oberfläche ein Halteelement (6) aufgebracht wird, wobei der Sensor auf einer auf die Oberfläche aufzusetzende Seite mit einem plastisch verformbaren Koppelmedium (5), das ein Klebmittel aufweist, versehen wird, wobei der Sensor (1) auf die Oberfläche aufgesetzt wird, so dass der Sensor mit Hilfe des Halteelements (6) auf die Oberfläche gedrückt wird, wobei das Koppelmedium (5) durch den Anpressdruck plastisch verformt, **dadurch gekennzeichnet, dass** das Koppelmedium (5) mit einer ballonförmigen Oberfläche auf den Sensor (1) aufgebracht wird, so dass beim Aufbringen auf die Oberfläche keine Blasenbildung auftritt.

2. Verfahren nach Anspruch 1, wobei der Sensors (1) so auf die Oberfläche aufgesetzt wird, dass das Halteelement (6) mit einer Halteeinrichtung (8, 9,10) des Sensors (1) zusammenwirkt.

3. Verfahren nach Anspruch 2, wobei das Halteelement (6) einen Bolzen aufweist, der auf der Oberfläche befestigt wird, wobei die Halteeinrichtung (8, 9, 10) des Sensors (1) eine Ausnehmung (8) aufweist, wobei der Sensor so auf den Bolzen (6) aufgesetzt wird, dass der Bolzen (6) in die Ausnehmung (8) eingreift, wobei der Bolzen (6) in der Ausnehmung (8) verspannt wird, so dass der Sensor (1) gegen die Oberfläche gedrückt wird.

4. Verfahren nach Anspruch 3, wobei zum Verspannen des Sensors mit dem Bolzen (6) ein Verspannelement (9) an einem Kopf (7) des Bolzens (6) angebracht wird, so dass eine Kraft zwischen dem Kopf des Bolzens (6) und dem Sensor (1) bewirkt wird.

5. Verfahren nach einem der Ansprüche 1 bis 4, wobei das Halteelement (6) mit Hilfe eines Klebstoffes an der Oberfläche befestigt wird, wobei der Klebstoff so gestaltet ist, um einer Zugkraft zwischen dem Halteelement (6) und der Oberfläche zu widerstehen, bis der Sensor (1) durch das Koppelmedium (5) sicher gehalten wird.

6. Verfahren nach einem der Ansprüche 1 bis 5, wobei das Halteelement (6) mit Hilfe einer PUR-Folie oder PVB-Folie an der Oberfläche befestigt wird.

7. Sensor (1) zum Befestigen auf einer Oberfläche, wobei der Sensor eine Halteeinrichtung (8, 9,10) zum Zusammenwirken mit einem auf der Oberfläche angebrachten Halteelement (6) aufweist, wobei die Halteeinrichtung (8, 9,10) geeignet ist, um eine Kraft zwischen dem Sensor (1) auf der Oberfläche zu bewirken, wobei der Sensor (1) auf einer auf die Oberfläche aufzusetzende Seite mit einem plastisch verformbaren Koppelmedium (5), das Klebstoff ausweist, versehen ist, um nach Aufbringen unter Druck den Sensor (1) und der Oberfläche zu befestigen, **dadurch gekennzeichnet, dass** das Koppelmedium (5) ballonförmig auf den Sensor (1) aufgebracht ist.

8. Sensor (1) nach Anspruch 7, wobei das Koppelmedium (5) mit einem Farbstoff versehen ist.

9. Sensor (1) nach einem der Ansprüche 7 bis 8, wobei die Halteeinrichtung (8, 9, 10) eine Ausnehmung (8) aufweist, in die das Halteelement (6) eingreifen kann, wobei die Halteeinrichtung (8, 9, 10) ein Verspannelement (10) aufweist, mit dem das Halteelement und der Sensor (1) gegeneinander verspannbar sind, um auf den Sensor (1) eine Kraft auszuüben.

10. Sensor (1) nach Anspruch 9, wobei das Halteelement (6) einen Bolzen mit einem Kopf (7) aufweist, wobei das Verspannelement (9) als Schiebeelement (9) ausgebildet ist, um bei Verschieben mit dem Kopf (7) des Bolzens (6) zusammenzuwirken, so dass eine Kraft zwischen Sensor (1) und der Oberfläche bewirkt wird.

11. Sensor (1) nach Anspruch 10, wobei das Schieberelement (9) eine Schräge aufweist, die mit einer Kante des Kopfes (7) des Bolzens (6) zusammenwirkt, so dass bei Verschieben des Schieberelements (9) in Richtung des Kopfes (7) durch Angreifen der Schräge an der Kante eine Kraft zwischen Bolzen (6) und Sensor (1) bewirkt wird.

12. Sensor (1) nach Anspruch 10, wobei das Schieberelement (9) als Federelement ausgebildet ist, das in Richtung des Kopfes (7) des Bolzens (6) verschiebbar ist, um eine Federkraft zwischen dem Bolzen (6) und dem (1) Sensor zu bewirken.

13. Sensoranordnung auf einer Oberfläche mit einem Sensor (1) nach einem der Ansprüche 7 bis 12.

14. Sensoranordnung nach Anspruch 13, wobei das Halteelement (6) auf der Oberfläche verklebt ist, um einer Zugkraft solange zu widerstehen, bis der Sensor (1) mit Hilfe des Koppelmediums (5) auf der Oberfläche gehalten wird.

## Claims

1. Method for fixing a sensor (1) onto a surface, in particular for fixing a rain sensor onto a window surface, wherein a retaining element (6) is fitted onto the surface, wherein the sensor is provided on a side to be placed onto the surface with a plastically deformable coupling medium (5) which has an adhesive agent, wherein the sensor (1) is placed onto the surface such that the sensor is pressed onto the surface with the aid of the retaining element (6), and wherein the coupling medium (5) is plastically deformed by the contact pressure, **characterized in that** the coupling medium (5) is applied with a balloon-shaped surface to the sensor (1), and therefore no formation of bubbles occurs when the sensor is fitted onto the surface.

2. Method according to Claim 1, wherein the sensor (1) is placed onto the surface in such a manner that the retaining element (6) interacts with a retaining device (8, 9, 10) of the sensor (1).

3. Method according to Claim 2, wherein the retaining element (6) has a bolt which is fixed on the surface, wherein the retaining device (8, 9, 10) of the sensor (1) has a recess (8), wherein the sensor is placed onto the bolt (6) in such a manner that the bolt (6) engages in the recess (8), and wherein the bolt (6) is clamped in the recess (8), and therefore the sensor (1) is pressed against the surface.

4. Method according to Claim 3, wherein, in order to clamp the sensor with the bolt (6), a clamping element (9) is attached to a head (7) of the bolt (6), and therefore a force is brought about between the head of the bolt (6) and the sensor (1).

5. Method according to one of Claims 1 to 4, wherein the retaining element (6) is fixed to the surface with the aid of an adhesive, wherein the adhesive is designed in order to withstand a tensile force between the retaining element (6) and the surface until the sensor (1) is held securely by the coupling medium (5).

6. Method according to one of Claims 1 to 5, wherein the retaining element (6) is fixed to the surface with the aid of a PUR film or PVB film.

7. Sensor (1) for fixing onto a surface, wherein the sensor has a retaining device (8, 9, 10) for interaction with a retaining element (6) fitted on the surface, wherein the retaining device (8, 9, 10) is suitable in order to bring about a force between the sensor (1) and the surface, wherein the sensor (1) is provided on a side to be placed onto the surface with a plastically deformable coupling medium (5) which has adhesive, in order, after application under pressure, to fix the sensor (1) onto the surface, **characterized in that** the coupling medium (5) is applied in a balloon-shaped manner to the sensor (1).

8. Sensor (1) according to Claim 7, wherein the coupling medium (5) is provided with a dye.

9. Sensor (1) according to either of Claims 7 and 8, wherein the retaining device (8, 9, 10) has a recess (8) in which the retaining element (6) can engage, and wherein the retaining device (8, 9, 10) has a clamping element (10) with which the retaining element and the sensor (1) can be clamped in relation to each other in order to exert a force on the sensor (1).

10. Sensor (1) according to Claim 9, wherein the retaining element (6) has a bolt with a head (7), and wherein the clamping element (9) is designed as a slide element (9) in order, upon displacement, to interact with the head (7) of the bolt (6) such that a force is brought about between sensor (1) and the surface.

11. Sensor (1) according to Claim 10, wherein the slide element (9) has a slope which interacts with an edge of the head (7) of the bolt (6) such that, upon displacement of the slide element (9) in the direction of the head (7), a force is brought about between bolt (6) and sensor (1) by engagement of the slope on the edge.

12. Sensor (1) according to Claim 10, wherein the slide element (9) is designed as a spring element which can be displaced in the direction of the head (7) of the bolt (6) in order to bring about a spring force between the bolt (6) and the sensor (1).

13. Sensor arrangement on a surface with a sensor (1) according to one of Claims 7 to 12.

14. Sensor arrangement according to Claim 13, wherein the retaining element (6) is adhesively bonded on the surface in order to withstand a tensile force until the sensor (1) is held on the surface with the aid of the coupling medium (5).

## Revendications

1. Procédé de fixation d'un capteur (1) sur une surface, en particulier pour fixer un capteur de pluie à la surface d'une vitre, en rapportant un élément de retenue (6) sur la surface, en garnissant un côté du capteur à poser sur la surface avec un agent de couplage (5) à déformation plastique, ayant un adhésif, en posant le capteur (1) sur la surface de sorte qu'il soi pressé sur la surface à l'aide de l'élément de retenue (6), l'agent de couplage (5) subissant une déformation plastique par la compression,
**caractérisé en ce qu'**
on pose sur le capteur (1) l'agent de couplage (5), en formant une surface ballonnée, de manière à ne pas former de bulle lors de l'installation sur la surface.

2. Procédé selon la revendication 1
**caractérisé en ce que**
le capteur (1) est posé sur la surface de manière à ce que l'élément de retenue (6) coopère avec un dispositif de retenue (8, 9, 10) du capteur (1).

3. Procédé selon la revendication 2,
**caractérisé en ce que**
l'élément de retenue (6) présente un boulon que l'on fixe sur la surface, le dispositif de retenue (8, 9, 10) du capteur (1) présente un évidement (8), le capteur est posé sur le boulon (6) de manière à ce que le boulon (6) s'engage dans l'évidement (8), et on presse le boulon (6) dans l'évidement (8) de manière à ce que le capteur (1) soit pressé contre la surface.

4. Procédé selon la revendication 3,
**caractérisé en ce qu'**
un élément de pressage (9) est placé sur la tête (7) du boulon (6) pour presser le capteur avec le boulon (6), de sorte qu'une force agisse entre la tête du boulon (6) et le capteur (1).

5. Procédé selon l'une quelconque des revendications 1 à 4,
**caractérisé en ce que**
l'élément de retenue (6) est fixé sur la surface à l'aide d'un adhésif, l'adhésif étant conçu pour résister à une force de traction entre l'élément de retenue (6) et la surface jusqu'à ce que le capteur (1) soit maintenu en toute sécurité par l'agent de couplage (5).

6. Procédé selon l'une quelconque des revendications 1 à 5,
**caractérisé en ce que**
l'élément de retenue (6) est fixé sur la surface à l'aide d'un film PUR ou d'un film PVB.

7. Capteur (1) à fixer sur une surface, le capteur présentant un dispositif de retenue (8, 9, 10) afin de coopérer avec un élément de retenue (6) placé sur la surface, le dispositif de retenue (8, 9, 10) étant prévue pour induire une force entre le capteur (1) et la surface, le capteur (1) étant pourvu sur un côté à poser sur la surface, d'un agent de couplage (5) à déformation plastique qui présente un adhésif pour fixer, une fois en place, le capteur (1) sous pression sur la surface,
**caractérisé en ce qu'**
l'agente de couplage (5) est appliqué sur le capteur (1) en formant un ballon.

8. Capteur (1) selon la revendication 7,
**caractérisé en ce que**
l'agent de couplage (5) est pourvu d'un colorant.

9. Capteur (1) selon l'une quelconque des revendications 7 à 8,
**caractérisé en ce que**
le dispositif de retenue (8, 9, 10) présente un évidement (8) dans lequel l'élément de retenue (6) peut s'engager, le dispositif de retenue (8, 9, 10) présente un élément de pression (10) permettant de presser l'élément de retenue et le capteur (1) l'un contre l'autre afin d'exercer une force sur le capteur (1).

10. Capteur (1) selon la revendication 9,
**caractérisé en ce que**
l'élément de retenue (6) présente un boulon comportant une tête (7), l'élément de pression (9) est en forme d'élément coulissant (9) pour coopérer avec la tête (7) du boulon (6) lors du coulissage de manière à induire une force entre le capteur (1) et la surface.

11. Capteur (1) selon la revendication 10,
**caractérisé en ce que**
l'élément coulissant (9) présente un biseau qui coopère avec une arête de la tête (7) du boulon (6) pour induire une force est entre le boulon (6) et le capteur (1) lors du coulissage de l'élément coulissant (9) en direction de la tête (7) grâce à l'attaque de l'arête par le biseau.

12. Capteur (1) selon la revendication 10,
**caractérisé en ce que**
l'élément coulissant (9) est en forme d'élément de ressort qui peut coulisser en direction de la tête (7) du boulon (6) afin de créer une force élastique entre le boulon (6) et le capteur (1).

13. Dispositif de détection sur une surface comportant un capteur (1) selon l'une quelconque des revendications 7 à 12.

14. Dispositif de détection selon la revendication 13,
**caractérisé en ce que**
l'élément de retenue (6) est collé sur la surface afin de résister à une force de traction jusqu'à ce que le capteur (1) soit tenu sur la surface à l'aide de l'agent de couplage (5).
